# EUROPEAN PATENT APPLICATION

(11) **EP 4 056 389 A1**
(43) Date of publication of application: **14.09.2022**
(21) Application number: 22160740.1
(22) Date of filing: 08.03.2022
(51) Int. Cl.: B60D 1/06

(54) **COUPLING DEVICE AND ASSEMBLY**

(30) Priority: 10.03.2021 IT 202100005633
(71) Applicant: Dyna.Co S.r.l., 46051 San Giorgio Bigarello (MN) (IT)
(72) Inventor: Sissa, Alessandro, 46051 San Giorgio Bigarello (MN) (IT)
(74) Representative: Hoffmann Eitle

(57) **Abstract**

A coupling device (1) of a tow ball (49) comprising:
- a device body (2), which circumscribes: (i) a ball-insertion opening (4) extending around a substantially vertical axis (X), and (ii) a ball-receiving cavity (6);
wherein said device body (2) delimits a plurality of radial ducts (8) spaced around the ball-insertion opening (4) and communicating with the ball-receiving cavity (6);
- thrust elements (10), each of which is slidably received in a radial duct (8) between a rearward position and an forward position;
- an actuation ring (12) of the thrust elements (10) between the rearward position and the forward position, said actuation ring (12) being mounted in a translatable or rotatable manner with respect to the device body (2);
- one or more ball-locking members (14) in the ball-receiving cavity (6), which extends/extend in an annular or semi-annular manner at the radial ducts (8) and movable by the thrust elements (10).

In the rearward position of the thrust elements (10), said one or more ball-locking members (14) is/are at least partially displaced radially from the ball-insertion opening (4) in a release configuration. In the forward position of the thrust elements (10), said one or more ball-locking members (14) protrudes/protrude superimposed to the ball-insertion opening (4) in a locking configuration.

## Description

The present invention relates to a coupling device of a tow ball, and to an assembly comprising said coupling device and a tow ball.

The prior art document US 2013/001923 A1 discloses a tow system with a ball joint which provides for a locking of the spherical portion of such joint by means of a dowel which acts - in a locking fashion - on only one side of the spherical portion.

However, a tow system of this type reveals the drawback of concentrating part of the forces to retain the spherical portion on a relatively small lateral surface of such portion, therefore such system can deteriorate rapidly. This deterioration accelerates as the weight of the towed equipment increases.

The prior art documents US 6 540 426 B2, GB 2 586 134 A, US 5 326 123 A and US 6 186 693 B1 illustrate other connection systems known in the prior art.

After a long and intense research and development activity, the Applicant developed a coupling device and an assembly capable of providing an appropriate response to the existing limits, drawbacks and problems.

In particular, the Applicant developed a coupling device designed to act -in a locking fashion - on several sides of the tow ball, preferably up to 360°, and it is capable of distributing the locking forces on an upper surface with respect to the currently known systems, and which is better distributed around the tow ball. Therefore, forming a further object of the present invention is a coupling device of a tow ball, having the characteristics as defined in the attached claims.

Furthermore, forming an object of the present invention is an assembly comprising said coupling device and a tow ball, having the characteristics as defined in the attached claims.

Preferred embodiments of the present invention will be described hereinafter by way of non-limiting example, with reference to the drawings, wherein:
- figure 1 shows an exploded view of an assembly, subject of the present invention, according to a first embodiment;
- figure 2 illustrates a longitudinal cross-section of the assembly of figure 1, in a release configuration;
- figure 3 shows a cross-sectional view along the plane III-III illustrated in figure 2;
- figure 4 shows an enlargement of the detail IV highlighted in figure 3;
- figure 5 illustrates a longitudinal cross-section of the assembly of figure 1, in a locking configuration;
- figure 6 shows a cross-sectional view along the plane VI-VI illustrated in figure 5;
- figure 7 shows an enlargement of the detail VII highlighted in figure 6;
- figure 8 shows an exploded and longitudinal cross-sectional view of an assembly, subject of the present invention, according to a second embodiment;
- figures 9, 10, 11, 12 show a sequence for locking and unlocking the assembly of figure 8;
- figures 13, 14, 15, 16 illustrate enlarged details of the highlighted areas XIII, XIV, XV, XVI respectively indicated in figure 9, 10, 11, 12;

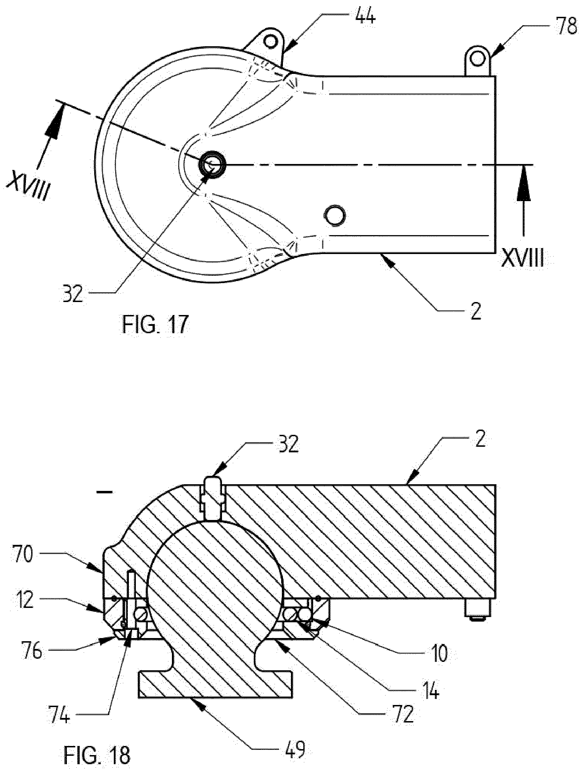

- figures 17, 18, 19 respectively show a top view, a cross-sectional view and an exploded view of an assembly, subject of the present invention, according to a third embodiment, wherein the section of figure 18 is carried out along the plane XVIII-XVIII indicated in figure 17, and wherein the tow ball was omitted from figure 19;
- figure 20 illustrates a top view of an assembly according to a further embodiment;
- figures 21, 22 respectively show a top view and a lateral view of an assembly according to yet another embodiment;
- figures 23, 24 show exploded views of two assemblies, subject of the present invention, according to further embodiments (respectively corresponding to figures 1 and 8) which are however without one or more ball-locking members.

It should be observed that, in the following description, identical reference numerals correspond to identical or corresponding technical characteristics.

With reference to the attached drawings, a coupling device of a tow ball 49 is indicated in its entirety with reference numeral 1.

The coupling device 1 comprises a device body 2, thrust elements 10, an actuation ring 12 and one or more ball-locking members 14.

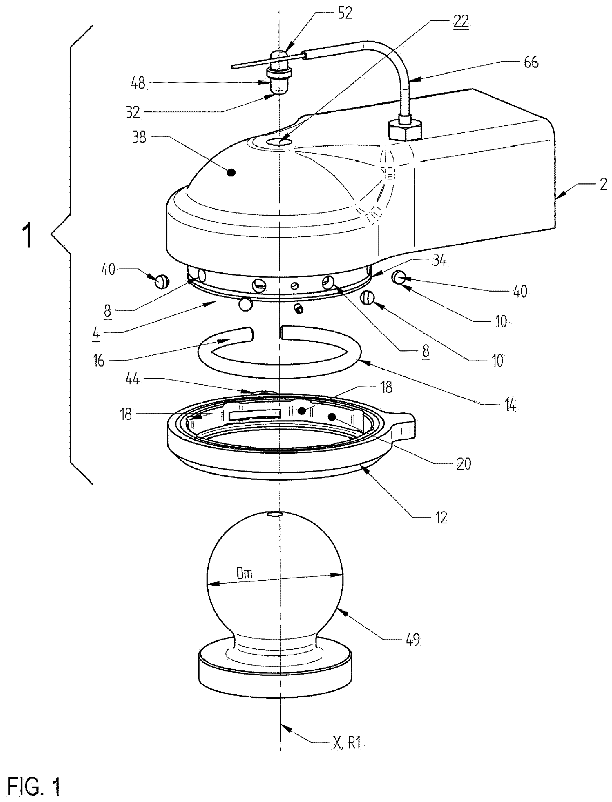

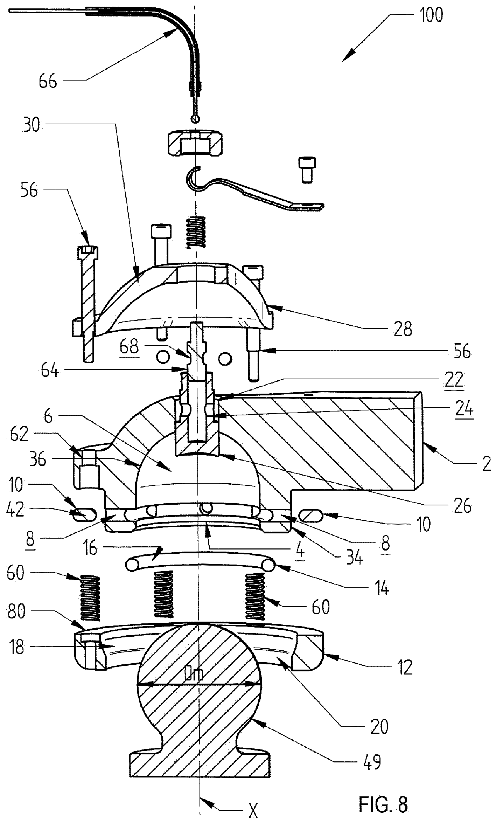

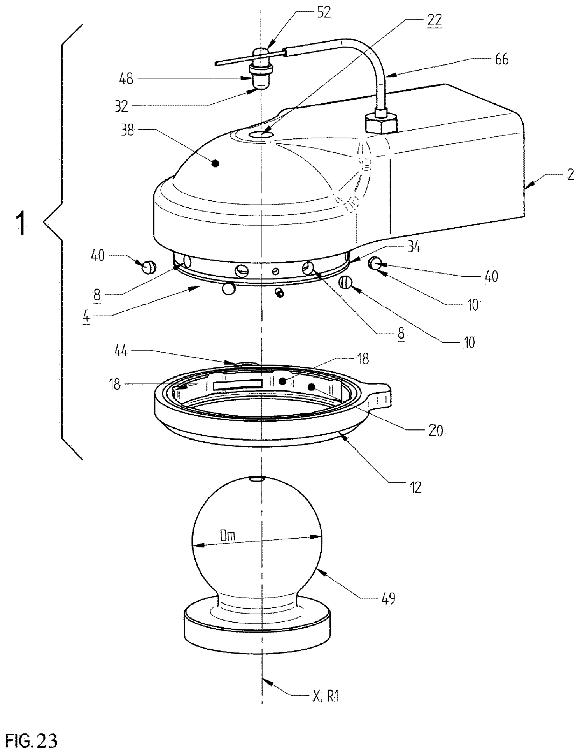

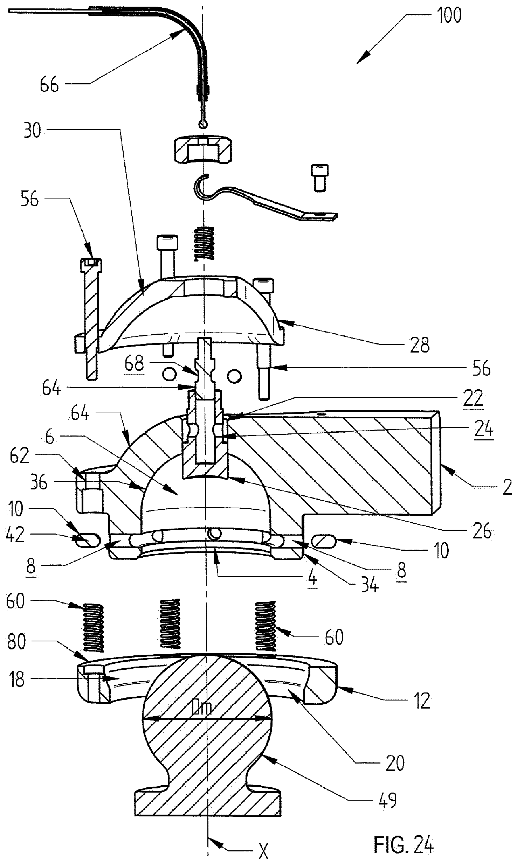

Shown hereinafter are two embodiments: a first embodiment (for example figure 1 or figure 8) wherein the coupling device 1 is provided with one or more ball-locking members 14, and a second embodiment (for example figure 23 or figure 24) wherein the coupling device 1 is without ball-locking members.

Regarding this second embodiment, it should be observed that the locking of the ball is directly carried out by the thrust elements 10 which - due to this function directly exerted on the tow ball 49 - will be referred to as retention elements 10. Despite this, preferred characteristics of the thrust elements 10 may also refer to the retention elements 10 of the second embodiment.

The device body 2 circumscribes a ball-insertion opening 4 and a ball-receiving cavity 6.

The ball-receiving cavity 6 is accessible through the ball-insertion opening 4, and the tow ball 49 may therefore be inserted into the, or removed from the, ball-receiving cavity 6 through said opening 4.

The ball-insertion opening 4 extends around a substantially vertical axis X. Preferably, a coupling or de-coupling between the coupling device 1 and the tow ball 49 occurs along or parallel to the substantially vertical axis X.

More precisely, the device body 2 comprises an annular edge 34 which extends around the substantially vertical axis X and which circumscribes the ball-insertion opening 4. The substantially vertical axis X is preferably an axis arranged centrally with respect to the ball-receiving cavity 6.

In this description, the expressions "radial", "axial" or "angular" are used to indicate the substantially vertical axis X.

Preferably, the device body 2 defines a semi-spherical surface 36 which partly circumscribes the ball-receiving cavity 6, in particular it circumscribes a top part of said cavity 6.

The device body 2 preferably delimits at least one external opening 22 (that is, which faces - at an outer surface of the body 38 of the device body 2) and an internal passage 24 between said external opening 22 and the ball-receiving cavity 6. The internal passage 24 is preferably an axial passage which extends along or parallel or coaxially to the substantially vertical axis X.

Preferably, the coupling device 1 comprises at least one signalling element 32, inserted into the internal passage 24, which can be moved between a de-coupling position and a coupling position. This movement occurs through the tow ball 49 which, occupying the ball-receiving cavity 6, presses a contact portion 48 of the signalling element 32 therefore pushing it into the internal passage 24.

Therefore, when the tow ball 49 lies outside the ball-receiving cavity 6, or it is not inserted correctly, the contact portion 48 projects into said cavity 6 and the signalling element 32 is in the de-coupling position. By contrast, when the tow ball 49 is correctly inserted into the ball-receiving cavity 6, the contact portion 48 is pushed by the tow ball 49 at least partially outside the ball-receiving cavity 6, therefore the signalling element 32 is arranged - translating in the internal passage 24 - in the coupling position.

In the coupling position, a signalling portion 52 of the signalling element 32 preferably protrudes and/or is visible through the external opening 22.

In the de-coupling position, a signalling portion 52 of the signalling element 32 is preferably housed in the internal passage 24 in a substantially complete manner and/or it is not visible through the external opening 22.

By way of example, the signalling portion 52 of the signalling element 32 could be coloured with a different colour with respect to the device body 2 or the outer surface of the body 32, preferably with a colour such to create a chromatic contrast with a colour of said body 2 or of said surface 32.

Furthermore, the device body 2 delimits a plurality of radial ducts 8 spaced around the ball-insertion opening 4 and communicating with the ball-receiving cavity 6.

These radial ducts 8 are preferably through ducts suitable to place the ball-receiving cavity 6 in communication with an external environment with respect to said cavity 6.

The radial ducts 8 are preferably equally spaced with respect to each other, more preferably angularly equally spaced.

The number of radial ducts 8 is preferably equal to or greater than 3 and, more preferably, equal to or smaller than 20. For example, the device body 2 could delimit from 3 to 15 radial ducts 8, preferably from 4 to 12 radial ducts.

According to different embodiments, the radial ducts 8 could be delimited by a device body 2 made of a single piece, or by a device body 2 made of several pieces.

For example, with reference to the embodiment of figure 1 or of figure 8, the radial ducts 8 could be obtained from the solid part of the device body 2, for example through chip removal operations.

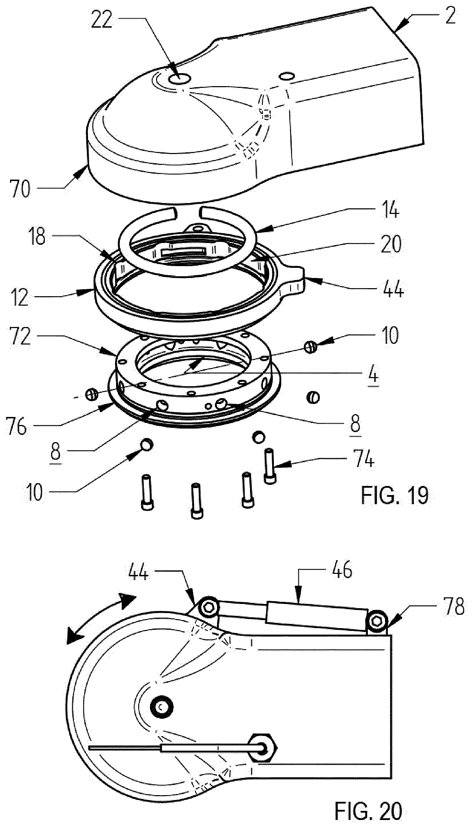

For example, with reference to the embodiment of figure 19, the device body 2 could comprise a main body 70 and a separate secondary body 72 fixed to the main body 70, wherein the radial ducts 8 could be delimited by the secondary body 72.

Preferably, the secondary body 72 is releasably fixed below the main body 70. By way of example, the secondary body 72 is fixed to the main body 70 through a plurality of first connection screws 74. Preferably, the first connection screws 74 are threaded rods in the main body 70 and through screws in the secondary body 72.

In the presence of a secondary body 72, the actuation ring 12 is preferably constrained axially with respect to the main body 70 by said secondary body 72. In this regard, the secondary body 72 preferably comprises at least one abutment lip 76 (preferably annular-shaped) configured to abut against the actuation ring 12. The abutment lip 76 preferably serves as rotary guide for the actuation ring 12.

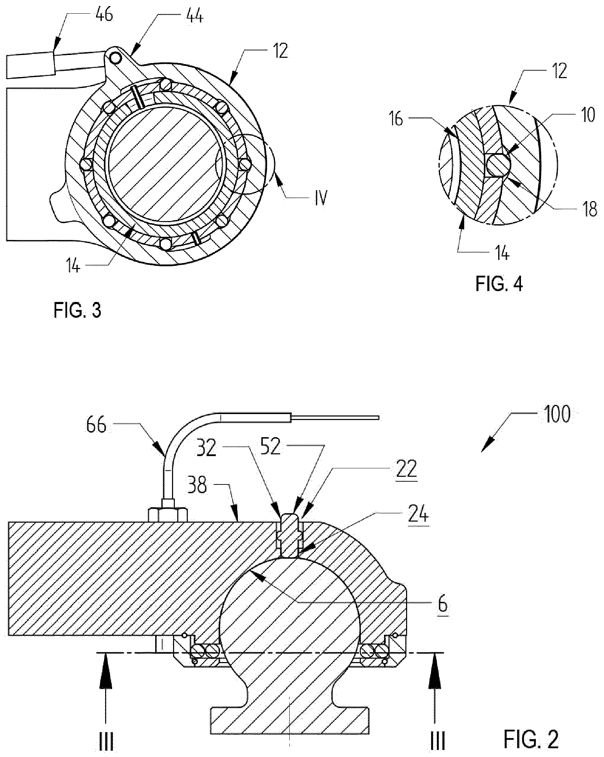

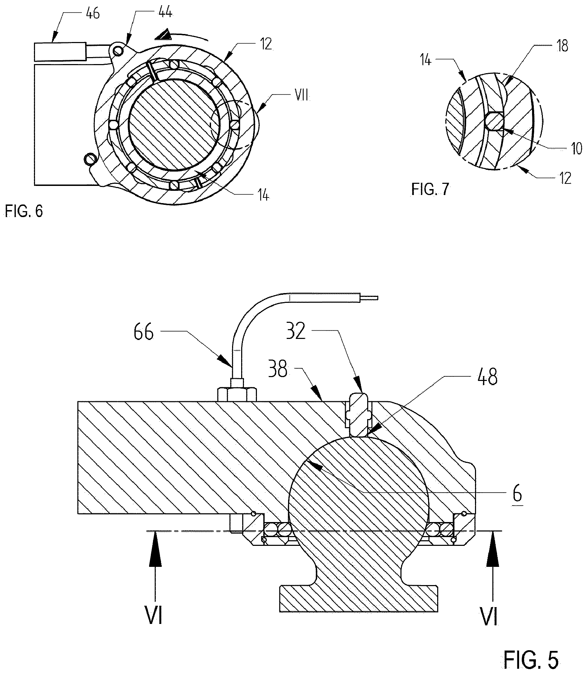

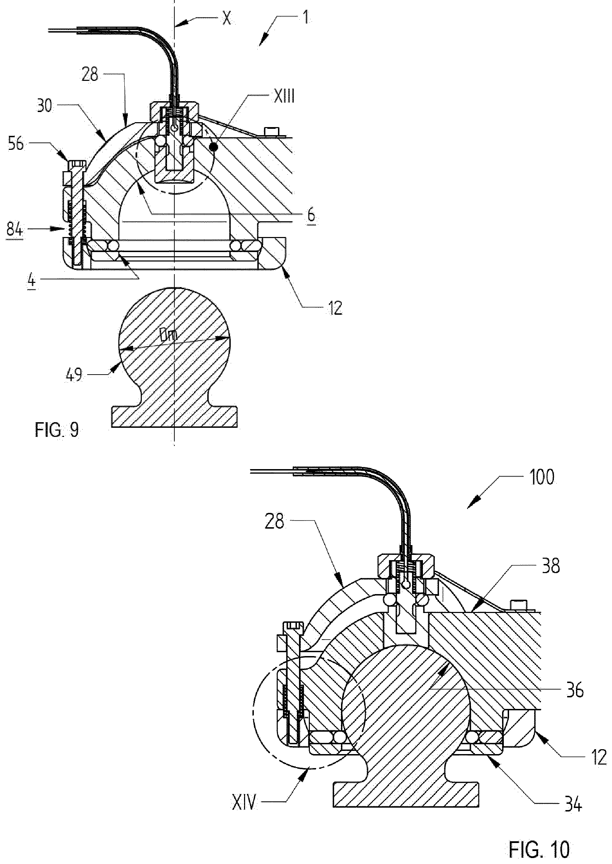

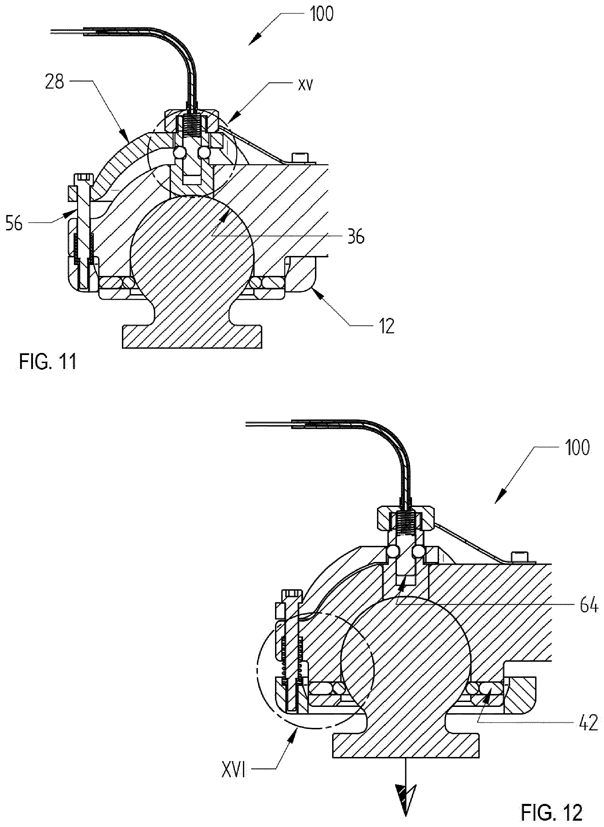

Each thrust element 10 is slidably housed in a radial duct 8 between a rearward position (for example see figure 2 or figure 9) and an forward position (for example see figure 5 or figure 11).

In this description, also the terms "rearward" and "forward" refer to the substantially vertical axis X, depending on the respectively greater or smaller distance from said axis X.

The thrust elements 10 comprise or, alternatively, consist of spherical bodies 40 and/or pins 42.

In the shown embodiments, each radial duct 8 houses only one thrust element 10. According to other embodiments (not shown), each radial duct 8 houses a plurality of thrust elements 10, preferably arranged in a row along said radial duct 8.

The actuation ring 12 of the thrust elements 10 is mounted in a translatable manner (for example see figure 8) or rotatable manner (for example see figure 1; around a first rotation axis R1) with respect to the device body 2, so as to press or cause a movement of these elements 10 between the rearward position and the forward position.

Preferably, the actuation ring 12 comprises at least one radial appendage 44 which projects radially outwards.

According to an embodiment, the radial appendage 44 may serve as an end-stop element during the rotation of the actuation ring 12. For example, with reference to figure 6, this radial appendage 44 (shown at the bottom in this figure) is configured to abut against a stop element schematised by a circle. According to another embodiment, the radial appendage 44 may serve as a connection element for a linear actuator 46, as addressed in greater detail below, preferably by a rotatable connection element for said actuator 46.

The actuation ring 12 preferably delimits cam surfaces 18 for pressing the thrust elements 10 from the rearward position to the forward position, and stop surfaces 20 for keeping the thrust elements 10 in the forward position.

Preferably, the cam surfaces 18 have a radial extension with respect to the substantially vertical axis X. Preferably, the stop surfaces 20 are tubular with respect to the substantially vertical axis X. In other words, the stop surfaces 20 offer a stop abutment substantially vertical with respect to the thrust elements 10. The cam surfaces 18 are preferably shaped so as to press all thrust elements 10 in a substantially synchronous manner.

The stop surfaces 20 are preferably adjacent to the cam surfaces 18.

According to an embodiment, the cam surfaces 18 are axially offset with respect to the stop surfaces 20 along the substantially vertical axis X.

According to another embodiment, the cam surfaces 18 are angularly offset with respect to the stop surfaces 20 around the substantially vertical axis X.

Said one or more ball-locking members 14 in the ball-receiving cavity 6 extends/extend in an annular or semi-annular manner at the radial ducts 8 and it is/they are movable by the thrust elements 10. Therefore:
(I) in the rearward position of the thrust elements 10, said one or more ball-locking members 14 is/are at least partially displaced radially from the ball-insertion opening 4 in a release configuration;
(II) in the forward position of the thrust elements 10, said one or more ball-locking members 14 protrudes/protrude superimposed to the ball-insertion opening 4 in a locking configuration.

Therefore, in the release configuration said ball-locking member 14 or plurality thereof is partly moved, offset, or not superimposed to the ball-insertion opening 4, so as to allow the tow ball 49 to be removed from the ball-receiving cavity 6.

Preferably, in the release configuration the ball-locking member 14 or plurality thereof circumscribes a passage cross-section equal to or greater than a maximum diameter Dₘ of the tow ball 49.

By contrast, in the locking configuration said ball-locking member 14 or plurality thereof projects superimposed to the ball-insertion opening 4, so as to prevent the tow ball 49 from exiting from the ball-receiving cavity 6.

Preferably, in the locking configuration the ball-locking member 14 or plurality thereof circumscribes a passage cross-section smaller than a maximum diameter Dₘ of the tow ball 49.

According to a first embodiment, the coupling device 1 comprises only one annular or semi-annular-shaped ball-locking member 14, preferably made of an elastic material that is deformable radially outwardly when free from constraints.

In the context of the present description, the expression "when free from constraints" means that when the thrust members 10 are not forced to the forward position by the actuation ring 12.

According to this embodiment, the ball-locking member 14 preferably provides a means for returning the thrust elements 10 to the rearward position. As a matter fact, when the thrust elements 10 do not act - under pressure - on the ball-locking member 14, this member 14 may be deformable radially outwardly - due to the elasticity specific of the material - so as to move the thrust elements from the forward position to the rearward position.

The ball-locking member 14 preferably has a toroidal cross-section.

According to a second embodiment, the coupling device 1 comprises a plurality of ball-locking members 14 which cooperate to carry out an annular or semi-annular locking of the tow ball 49. Preferably, each ball-locking member 14 delimit an independent abutment surface 16.

According to an embodiment, the coupling device 1 may be without a means for returning the ball-locking member 14 or the plurality thereof. As a matter fact, when the actuation ring 12 is rotated or translated so that the stop surfaces 20 are no longer aligned with respect to the radial ducts 8, the tow ball 49 may be removed from the ball-receiving cavity 6. As a result of this removal, the tow ball 49 will move the ball-locking member 14 or the plurality thereof (no longer retained in the forward position) toward the rearward position.

The coupling device 1 preferably comprises at least one linear actuator 46 (preferably of the hydraulic, pneumatic or mechanical type) fixed to the device body 2 and to the actuation ring 12. The linear actuator 46 can be preferably actuated to rotate the actuation ring 12 with respect to the device body 2, and therefore move the thrust elements 10. By way of example, the arrow shown in figure 6 illustrates the rotation (anticlockwise) of the actuation ring 12 to obtain the locking configuration. By way of further example, the double arrow shown in the figure 20 illustrates the opposite rotations of the actuation ring 12 to obtain the locking configuration or the release configuration.

Preferably, the linear actuator 46 is rotatably fixed to the device body 2 and to the actuation ring 12. More preferably, the linear actuator 46 is fixed to the at least one radial appendage 44 of the actuation ring 12 and to a body appendage 78 of the device body 2, for example as shown in figure 20.

Preferably, the coupling device 1 comprises at least one ball-abutment element 26 (or probe) and elements 28, 54 for transmitting motion from the ball-abutment element 26 to the actuation ring 12.

The ball-abutment element 26 projects into the ball-abutment element 6 and it is translatable in the internal passage 24 (for example see figures 9 and 10) under the engagement action of the tow ball 49 in the ball-receiving cavity 6.

Preferably, the ball-abutment element 26 projects from the top part of the ball-receiving cavity 6.

More preferably, the ball-abutment element 26 is counter-shaped with respect to a part of the tow ball 49. When the ball-abutment element 26 translates in the internal passage 24, the transmission elements 28, 54 move the actuation ring 12 integrally joined with the ball-abutment element 26, from the release configuration to the locking configuration.

Preferably, a first transmission element comprises or, alternatively, consists of a transmission cap 30, preferably semi-spherical, configured to be geometrically coupled to the device body 2.

The transmission cap 30 is preferably connected to the actuation ring 12 through a plurality of second connection screws 56 which extend from a flange 58 of the transmission cap 30, preferably with an axial extension. More precisely, the second connection screws 56 extend from the transmission cap 30, through axial openings 62 delimited by the device body 2 to be inserted into the actuation ring 12.

Preferably, one or more second connection screws 56 are mounted coaxially to at least one elastic element 60, preferably a helical spring.

Said elastic element 60 or said plurality of elastic elements 60 is configured to constantly force the actuation ring 12 moving away from the device body 2. Preferably, the elastic element 60 acts in a thrusting fashion between a surface 80 faced above the actuation ring 12 and a surface 82 faced below the device body 2.

Preferably, a second transmission element 54 comprises or, alternatively, consists of one or more transmission balls.

Preferably, at least one transmission element 54 can be actuated (preferably movable by the kinematic chain) so that the actuation ring 12 is movable independently from the ball-abutment element 26 from the locking configuration to the release configuration.

Therefore, for example with reference to figures 11 and 12, the coupling device preferably comprises a release element 64, movable with respect to the ball-abutment element 26 and configured to move a transmission element (preferably said transmission balls 54) from the space between the device body 2 and the transmission cap 30, or between the ball-abutment element 26 and the transmission cap 30 or between the ball-abutment element 26, so as to release the actuation ring 12 (that is, so as to allow an independent motion of the transmission cap 30 with respect to the ball-abutment element 26).

In this regard, the release element 64 delimits one or more radial grooves 68 configured to house said transmission balls 54.

Preferably, the release element 64 comprises an axially movable slider. More preferably, said slider is movable (preferably axially) in a recess 86 delimited by the ball-abutment element 26.

The release element 64 or the slider can be preferably actuated by means of a control cable 66, preferably actuatable from remote (for example from a cabin of a vehicle).

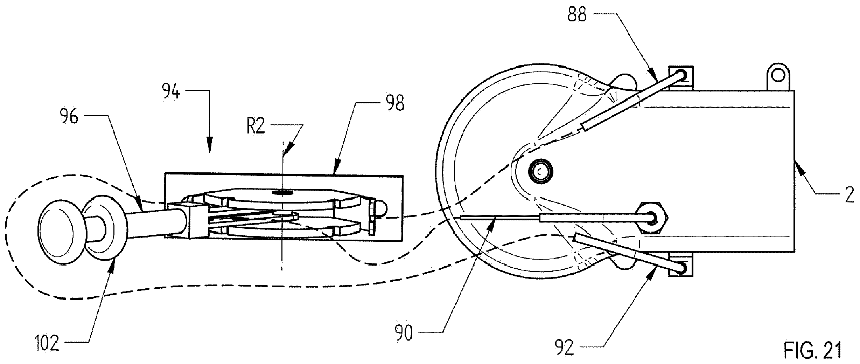

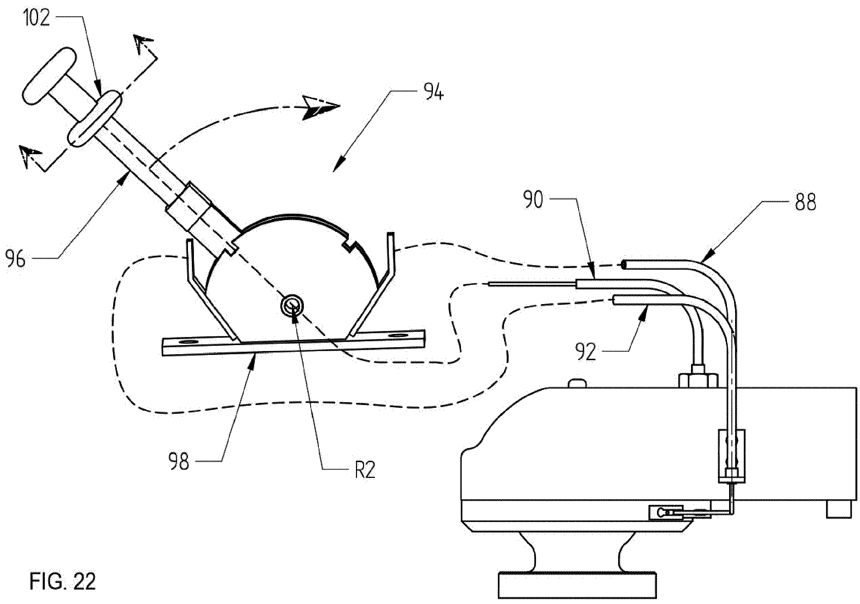

With reference to figures 21 and 22, the coupling device preferably comprises a remote control device 94 comprising at least one control lever 96. In the shown embodiment, the control lever 96 is mounted rotatable with respect to a device frame 98 around a second rotation axis R2.

Preferably, the remote control device 94 is functionally connected to a release cable 88 and to a locking cable 92, both connected to the actuation ring 12 to rotate it in opposite directions (clockwise direction or anticlockwise direction) depending on the needs. The control lever 96 preferably comprises a safe-release element 102 connected to a safe-release cable 90. Once the safe-release element 102 has been moved by a user, the control lever 96 can be moved to move the actuation ring through cables 88, 92.

With reference to the sequence according to figures 11-16, shown hereinafter is the operation of this embodiment.

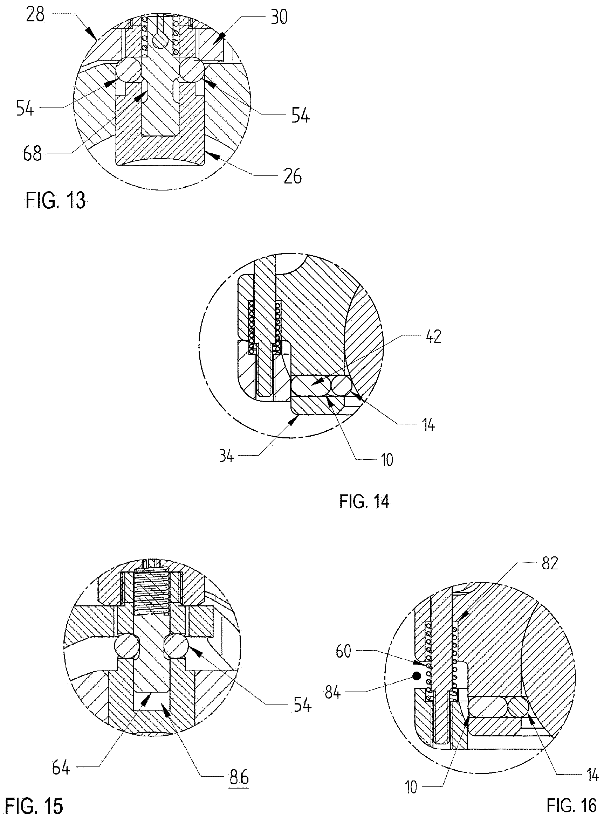

As schematised in figures 9 and 13, when the tow ball 49 is disengaged or removed from the ball-receiving cavity 6, the ball-abutment element 26 initially projects into said ball-receiving cavity 6. In this condition it can be observed that - at the second connection screws 56 - an intermediate space 84 is present between the device body 2 and the actuation ring 12.

Once the tow ball 49 has been inserted into the ball-receiving cavity 6 (figures 10 and 14), the ball-abutment element 26 translates in the internal passage 24. During this translation, the transmission elements 28, 54 move the actuation ring 12 integrally joined with the ball-abutment element 26, therefore the actuation ring 12 translates so as to move the ball-locking member or members 14 from the release configuration to the locking configuration.

More precisely, the force for inserting the tow ball 49 into the ball-receiving cavity 6 displaces the ball-abutment element 26 upwards (according to the orientation of these figures), and the transmission elements (preferably the transmission cap 30 and the transmission balls 54) move equally as much so as to lift the actuation ring 12. Figure 14 shows that the thrust element 10 is in forward position and that the ball-locking member 14 is in the locking configuration. The intermediate space 84 is instead reduced (until it is eliminated), given that the actuation ring lies substantially abutting against the device body 2. With reference to figures 11 and 15, the release element 64 is moved with respect to the ball-abutment element 26 (upwards, according to the orientation of these figures). In this event, the second transmission element 54 (preferably the transmission balls) is housed in radial grooves 68.

When the transmission cap 30 is no longer constrained to move integrally joined with the ball-abutment element 26 (figures 12 and 16), the elastic element 60 (or a plurality thereof) displaces the actuation ring 12 moving away with respect to the device body 2, allowing the actuation ring 12 to release the thrust elements 10. The latter may therefore move freely toward the rearward position, and the ball-locking members 14 may be arranged in the release configuration.

Furthermore, forming an object of the present invention is an assembly 100 comprising the coupling device 1 according to any one of the embodiments shown above, and a tow ball 49 releasably inserted into the ball-receiving cavity 6.

Lastly, forming an object of the present invention is a coupling device 1 of a tow ball 49 comprising:
- a device body 2, which circumscribes: (i) a ball-insertion opening 4 extending around a substantially vertical axis X, and (ii) a ball-receiving cavity 6;
wherein said device body 2 delimits a plurality of radial ducts 8 spaced around the ball-insertion opening 4 and communicating with the ball-receiving cavity 6;
- retention elements 10, each of which is slidably received in a radial duct 8 between a rearward position (or ball-release position) and an forward position (or ball-locking position);
- an actuation ring 12 of the retention elements 10 between the rearward position and the forward position, said actuation ring 12 being mounted in a translatable or rotatable manner with respect to the device body 2;
wherein:
(I) in the rearward position of the retention elements 10, said retention elements 10 are at least partially moved radially from the ball-insertion opening 4 to a release configuration;
(II) in the forward position of the retention elements 10, said retention elements 10 project superimposed to the ball-insertion opening 4 in a locking configuration;
the device body 2 delimiting at least one external opening 22 and an internal passage 24 between said external opening 22 and the ball-receiving cavity 6, and wherein the coupling device 1 comprises:
(a) at least one ball-abutment element 26, protruding into the ball-receiving cavity 6 and translatable in the internal passage 24;
(b) transmission elements 28, 54 which, in a translation of the ball-abutment element 26 in the internal passage 24, move the actuation ring 12 integrally joined with the ball-abutment element 26 from the release position to the locking position of the retention elements 10;
wherein a transmission element 54 can be actuated so that the actuation ring 12 is movable independently from the ball-abutment element 26, from the locking position to the release position of the retention elements 10.

Advantageously, the coupling device subject of the present invention is capable of providing a non-abrasive support on the surface of the tow ball, and therefore ensure extremely long durability thereof. Advantageously, the coupling device subject of the present invention provides a non-point-like contact with the tow ball, so as not to deteriorate it locally and ensuring less stresses on the members at contact. Advantageously, the coupling device subject of the present invention is easy to operate, given that the movements of the mechanical components are substantially unique.

Advantageously, the coupling device subject of the present invention allows to obtain an automatic locking of the tow ball.

Advantageously, the coupling device subject of the present invention is extremely reliable over time, due to the mechanical simplicity that characterises it.

Advantageously, the coupling device subject of the present invention allows to obtain a substantially irreversible locking of the tow ball. As a matter fact, irrespective of the amount of force acting on the thrust elements or on the retention elements by the tow ball radially outwards (in an attempt to disengage said ball from the ball-receiving cavity 6), the actuation ring was designed so as to prevent a movement of said elements in the rearward position.

As a matter fact, the force which tends to disengage the tow ball does not tend to stress the control members of the actuation ring (for example the linear actuator), but the control ring which is sized and consists of a material such that the force can be reduced without burdening the sizing of the control members.

Advantageously, the ball-locking member in the present coupling device allows to prevent the thrust members from exiting from the respective radial ducts.

With respect to embodiments of the coupling device and of the aforementioned assembly, a person skilled in the art could replace or modify the described characteristics depending on the needs. These embodiments are also to be considered included in the scope of protection formalised in the following claims.

Furthermore, it should be observed that any embodiment may be implemented independently from the other embodiments described.

**LIST OF REFERENCE NUMBERS**

| | | | |
|---|---|---|---|
| 1 | coupling device | 56 | second connection screw |
| 2 | device body | 58 | flange |
| 4 | ball-insertion opening | 60 | elastic element |
| 6 | ball-receiving cavity | 62 | axial opening |
| 8 | radial duct | 64 | release element |
| 10 | thrust element or retention elements | 66 | control cable |
| 12 | actuation ring | 68 | radial groove |
| 14 | ball-locking member | 70 | main body |
| 16 | abutment surface | 72 | secondary body |
| 18 | cam surface | 74 | first connection screw |
| 20 | stop surface | 76 | abutment lip |
| 22 | external opening | 78 | body appendage |
| 24 | internal passage | 80 | surface facing upwards |
| 26 | ball-abutment element | 82 | surface facing downwards |
| 28 | transmission element | 84 | intermediate space |
| 30 | cap | 86 | recess |
| 32 | signalling element | 88 | release cable |
| 34 | annular edge | 90 | safe-release cable |
| 36 | semi-spherical surface | 92 | locking cable |
| 38 | outer surface of the body | 94 | remote control device |
| 40 | spherical body | 96 | control lever |
| 42 | pin | 98 | device frame |
| 44 | radial appendage | 100 | assembly |
| 46 | linear actuator | 102 | safe-release element |
| 48 | contact portion | | |
| 49 | tow ball | Dₘ | maximum diameter |
| 52 | signalling portion | R1 | first rotation axis |
| 54 | transmission element, preferably | R2 | second rotation axis |
| | transmission ball | X | substantially vertical axis |

## Claims

1. A coupling device (1) of a tow ball (49) comprising:
- a device body (2), which circumscribes: (i) a ball-insertion opening (4) extending around a substantially vertical axis (X), and (ii) a ball-receiving cavity (6);
wherein said device body (2) delimits a plurality of radial ducts (8) spaced around the ball-insertion opening (4) and communicating with the ball-receiving cavity (6);
- thrust elements (10), each of which is slidably received in a radial duct (8) between a rearward position and an forward position;
- an actuation ring (12) of the thrust elements (10) between the rearward position and the forward position, said actuation ring (12) being mounted in a translatable or rotatable manner with respect to the device body (2);
- one or more ball-locking members (14) in the ball-receiving cavity (6), which extends/extend in an annular or semi-annular manner at the radial ducts (8) and movable by the thrust elements (10), wherein:
(I) in the rearward position of the thrust elements (10), said one or more ball-locking members (14) is/are at least partially displaced radially from the ball-insertion opening (4) in a release configuration;
(II) in the forward position of the thrust elements (10), said one or more ball-locking members (14) protrudes/protrude superimposed to the ball-insertion opening (4) in a locking configuration;
said coupling device being **characterised in that** it comprises a single annular or semi-annular-shaped ball-locking member (14) made of an elastic material deformable radially outwardly, said ball-locking member (14) providing means for returning the thrust elements (10) to the rearward position.

2. The coupling device (1) according to the preceding claim, wherein said actuation ring (12) delimits cam surfaces (18) for pressing the thrust elements (10) from the rearward position to the forward position, and stop surfaces (20) to keep the thrust elements (10) in the forward position, the stop surfaces (20) being adjacent to the cam surfaces (18) and being tubular with respect to the substantially vertical axis (X).

3. The coupling device (1) according to claim 2, wherein the actuation ring (12) is mounted translatable with respect to the device body (2), and wherein the cam surfaces (18) are axially offset relative to the stop surfaces (20) along the substantially vertical axis (X).

4. The coupling device (1) according to claim 2, wherein the actuation ring (12) is rotatably mounted with respect to the device body (2), and wherein the cam surfaces (18) are angularly offset with respect to the stop surfaces (20) around the substantially vertical axis (X).

5. The coupling device (1) according to any one of the preceding claims, wherein the device body (2) delimits at least one external opening (22) and an internal passage (24) between said external opening (22) and the ball-receiving cavity (6), and wherein the coupling device (1) comprises:
(a) at least one ball-abutment element (26), protruding into the ball-receiving cavity (6) and translatable in the internal passage (24);
(b) transmission elements (28, 54) which, in a translation of the ball-abutment element (26) in the internal passage (24), move the actuation ring (12) integrally joined with the ball-abutment element (26) from the release configuration to the locking configuration of the ball-locking member or members (14);
wherein a transmission element (54) can be actuated so that the actuation ring (12) is movable independently of the ball-abutment element (26) from the locking configuration to the release configuration of the ball-locking member or members (14).

6. The coupling device (1) according to the preceding claim, wherein a first transmission element comprises or, alternatively, consists of a transmission cap (30) configured to be geometrically coupled to the device body (2).

7. The coupling device (1) according to the preceding claim, comprising a release element (64), movable with respect to the ball-abutment element (26) and configured to displace a transmission element from a space between the device body (2) and the transmission cap (30), so as to allow an independent motion of the transmission cap (30) with respect to the ball-abutment element (26).

8. The coupling device (1) according to any one of claims 5-7, wherein a second transmission element (54) comprises or, alternatively, consists of one or more transmission balls.

9. The coupling device (1) according to claims 7 and 8, wherein, the release element (64) delimits one or more radial grooves (68) configured to house said transmission balls (54).

10. The coupling device (1) according to any one of claims 7-9, wherein the release element (64) comprises a slider movable in a recess (86) delimited by the ball-abutment element (26).

11. The coupling device (1) according to any one of the preceding claims, wherein the device body (2) delimits at least one external opening (22) and an internal passage (24) between said external opening (22) and the ball-receiving cavity (6), and wherein the coupling device (1) comprises at least one signalling element (32), inserted into the internal passage (24), which is movable between a de-coupling position and a coupling position wherein a part of said signalling element (32) protrudes and/or is visible through the external opening (22).

12. The coupling device (1) according to the preceding claim, wherein - in the de-coupling position - a signalling portion (52) of the signalling element (32) is housed in the internal passage (24) in a substantially complete manner and/or it is not visible through the external opening (22).

13. The coupling device (1) according to any one of the preceding claims, wherein the thrust elements (10) comprise or, alternatively, consist of spherical bodies (40) and/or pins (42).

14. The coupling device (1) according to any one of the preceding claims, wherein each radial duct (8) houses a single thrust element (10).

15. An assembly (100) comprising:
- the coupling device (1) according to any one of the preceding claims;
- a tow ball (49) releasably inserted into the ball-receiving cavity (6).
